# EUROPEAN PATENT APPLICATION

(11) **EP 4 851 705 A1**
(43) Date of publication of application: **09.12.2026**
(21) Application number: 25748340.4
(22) Date of filing: 17.01.2025
(51) Int. Cl.: G02F 1/13357, B32B 7/022, B32B 7/023, F21S 2/00, G02B 6/00, G02B 27/02

(54) **OPTICAL MEMBER, METHOD FOR MANUFACTURING SAME, AND OPTICAL DEVICE USING SAID OPTICAL MEMBER**

(30) Priority: 31.01.2024 JP 2024013317
(71) Applicant: Nitto Denko Corporation, Ibaraki-shi, Osaka 567-8680 (JP)
(72) Inventor: SATO Keisuke, Ibaraki-shi, Osaka 567-8680 (JP); SUZUKI Tatsuya, Ibaraki-shi, Osaka 567-8680 (JP); HATTORI Daisuke, Ibaraki-shi, Osaka 567-8680 (JP)
(74) Representative: Hoffmann Eitle
(86) International application number: PCT/JP2025/001244
(87) International publication number: WO 2025/164344

(57) **Abstract**

Provided is an optical member including a light guide plate and a low-refractive index layer, the optical member having sufficient strength to suppress their peeling, and having excellent light guiding performance. The optical member includes: a light guide plate; a low-refractive index layer arranged on one main surface of the light guide plate; a stress relaxation layer arranged on a side of the low-refractive index layer opposite to the light guide plate, the stress relaxation layer having a storage modulus of elasticity of from 0.01 MPa to 10 MPa; and a protective layer arranged on a side of the stress relaxation layer opposite to the low-refractive index layer, the protective layer having a tensile modulus of elasticity of 20 MPa or more.

## Description

### Technical Field

The present invention relates to an optical member and a method of producing the same, and an optical device using the optical member.

### Background Art

There has been known a technology including forming a low-refractive index layer on a light guide plate, and optically isolating light to be guided into the light guide plate, to guide the light while minimizing the influences of external factors (e.g., a scratch and dirt on the light guide plate). For example, an optical sheet in which a low-refractive index layer is laminated on a light guide plate via a pressure-sensitive adhesive layer has been known. According to such technology, a color shift and/or scattering caused by the pressure-sensitive adhesive layer may occur, and a light guide loss may occur. In order to solve such problems, a technology including directly laminating a low-refractive index layer on a light guide plate has been investigated. However, when the low-refractive index layer is directly laminated on the light guide plate, the strength of the low-refractive index layer is low, and hence there is a problem in that the strength of a laminate also becomes lower.

### Citation List

### Patent Literature

[PTL 1] JP 6606518 B2
[PTL 2] JP 2023-048451 A

### Summary of Invention

### Technical Problem

The present invention has been made to solve the above-mentioned related-art problems, and a primary object of the present invention is to provide an optical member including a light guide plate and a low-refractive index layer, the optical member having sufficient strength as a laminate and having excellent light guiding performance.

### Solution to Problem

[1] According to an embodiment of the present invention, there is provided an optical member including: a light guide plate; a low-refractive index layer arranged on one main surface of the light guide plate; a stress relaxation layer arranged on a side of the low-refractive index layer opposite to the light guide plate, the stress relaxation layer having a storage modulus of elasticity of from 0.01 MPa to 10 MPa; and a protective layer arranged on a side of the stress relaxation layer opposite to the low-refractive index layer, the protective layer having a tensile modulus of elasticity of 20 MPa or more.
[2] In the above-mentioned item [1], the low-refractive index layer has a refractive index of 1.25 or less.
[3] In the above-mentioned item [1] or [2], the low-refractive index layer has a thickness of 5 µm or less.
[4] In any one of the above-mentioned items [1] to [3], the low-refractive index layer has a haze of less than 5%.
[5] In any one of the above-mentioned items [1] to [4], the low-refractive index layer is directly laminated on the light guide plate.
[6] In any one of the above-mentioned items [1] to [5], the stress relaxation layer has a storage modulus of elasticity of from 0.08 MPa to 0.20 MPa and a thickness of from 5 µm to 20 µm.
[7] According to another aspect of the present invention, there is provided an optical device. The optical device includes the optical member of any one of the above-mentioned items [1] to [6].
[8] In the above-mentioned item [7], the optical device is selected from a device for a pair of AR glasses, a device for a pair of MR glasses, a device for a pair of VR glasses, a device for an illumination apparatus, and a backlight unit of an image display apparatus.
[9] According to still another aspect of the present invention, there is provided a method of producing the optical member of any one of the above-mentioned items [1] to [6]. The production method includes the steps of: forming a low-refractive index layer on a first base material to produce a first laminate; arranging a stress relaxation layer and a second base material in this order on the low-refractive index layer of the first laminate to produce an optical laminate; peeling the first base material from the optical laminate; and laminating the optical laminate from which the first base material has been peeled and a light guide plate so that the low-refractive index layer and the light guide plate are adjacent to each other.
[10] In the above-mentioned item [9], the production method includes directly laminating the optical laminate from which the first base material has been peeled and the light guide plate.

### Advantageous Effects of Invention

According to the embodiment of the present invention, the optical member including the light guide plate and the low-refractive index layer, the optical member having sufficient strength as a laminate and having excellent light guiding performance, can be achieved.

### Brief Description of Drawings

FIG. **1** is a schematic sectional view of an optical member according to one embodiment of the present invention.
FIG. **2A** is a schematic sectional view for describing one step in a method of producing an optical member according to an embodiment of the present invention.
FIG. **2B** is a schematic sectional view for describing another step in the method of producing an optical member according to the embodiment of the present invention.
FIG. **2C** is a schematic sectional view for describing still another step in the method of producing an optical member according to the embodiment of the present invention.
FIG. **2D** is a schematic sectional view for describing still another step in the method of producing an optical member according to the embodiment of the present invention.
FIG. **2E** is a schematic sectional view for describing still another step in the method of producing an optical member according to the embodiment of the present invention.

### Description of Embodiments

Embodiments of the present invention are described below, but the present invention is not limited to these embodiments. For ease of viewing, the drawings are schematically illustrated, and the thickness and size of each component of an optical member, and a mutual ratio between, for example, the thicknesses of the components in the drawings differ from actual ones.

### A. Overall Configuration of Optical Member

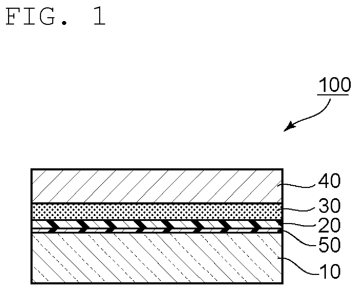

FIG. **1** is a schematic sectional view of an optical member according to one embodiment of the present invention. An optical member **100** of the illustrated example includes: a light guide plate **10**; a low-refractive index layer **20** arranged on one main surface (upper main surface in the illustrated example) of the light guide plate **10**; a stress relaxation layer **30** arranged on the side of the low-refractive index layer **20** opposite to the light guide plate **10**; and a protective layer **40** arranged on the side of the stress relaxation layer **30** opposite to the low-refractive index layer **20**. In the embodiment of the present invention, the storage modulus of elasticity of the stress relaxation layer is from 0.01 MPa to 10 MPa, and the tensile modulus of elasticity of the protective layer is 20 MPa or more. With such configuration, sufficient strength as a laminate can be obtained in a configuration in which the low-refractive index layer is laminated on the light guide plate without intermediation of any adhesive or pressure-sensitive adhesive. When the stress relaxation layer is arranged on the side of the low-refractive index layer opposite to the light guide plate, such effect may become significant. In the configuration in which the low-refractive index layer is laminated on the light guide plate without intermediation of any adhesive or pressure-sensitive adhesive, a color shift and/or scattering caused by a pressure-sensitive adhesive and the like is suppressed. As a result, a light guide loss is suppressed, and hence excellent light guiding performance can be achieved. Accordingly, according to the embodiment of the present invention, there can be achieved an optical member including a light guide plate and a low-refractive index layer, the optical member having sufficient strength as a laminate and having excellent light guiding performance. Further, when the storage modulus of elasticity of the stress relaxation layer and the tensile modulus of elasticity of the protective layer are set within such ranges as described above, an effect exhibited by the embodiment of the present invention can be significant.

The low-refractive index layer **20** is typically directly laminated on the light guide plate **10**. The term "direct lamination" as used herein means that two components (herein, the low-refractive index layer and the light guide plate) are laminated without intermediation of an adhesive layer or a pressure-sensitive adhesive layer. Here, the term "direct lamination" encompasses a case in which the low-refractive index layer **20** is laminated on the light guide plate **10** via an adhesion-assisting layer **50** as in the illustrated example. The adhesion-assisting layer typically contains a silane coupling agent, and as described later, the formed adhesion-assisting layer itself does not have an adhesive function or a pressure-sensitive adhesive function. Further, as also described later, the thickness of the adhesion-assisting layer is so small that the adhesion-assisting layer may not be clearly recognized as a layer. Accordingly, the form as in the illustrated example may also be encompassed in the term "direct lamination." The arrangement of the adhesion-assisting layer can achieve further excellent strength without impairing the light guiding performance of the optical member.

The total light transmittance of the optical member is preferably 60% or more and 99% or less, more preferably 70% or more and 98% or less, still more preferably 80% or more and 97% or less. In addition, the haze of the optical member is preferably 0.05% or more and 3% or less, more preferably 0.1% or more and 2.5% or less, still more preferably 0.2% or more and 2% or less. According to the embodiment of the present invention, the entirety of the optical member can achieve excellent transparency. As a result, the optical member may be suitably used for a pair of AR glasses, a pair of MR glasses, and a pair of VR glasses (hereinafter sometimes collectively referred to as "pair of AR glasses and the like"). The term "AR" is an abbreviation for "augmented reality," the term "MR" is an abbreviation for "mixed reality," and the term "VR" is an abbreviation for "virtual reality."

The optical member may have an elongated shape or a sheet shape. The elongated optical member may typically be wound into a roll shape.

The components of the optical member are described in detail below.

### B. Light Guide Plate

The light guide plate **10** is typically configured so that light that has entered the light guide plate propagates in the light guide plate through utilization of total reflection and is emitted in a predetermined direction at a predetermined position. The light guide plate may include glass or a resin. Examples of the resin include a thermoplastic resin and a reactive resin (e.g., a non-ionizing radiation-curable resin, such as an ultraviolet ray-, visible light-, or infrared ray-curable resin). Examples of the thermoplastic resin include: a COC resin or COP resin, such as a cyclic olefin copolymer or a cycloolefin resin; an acrylic resin such as polymethyl methacrylate (PMMA); a styrene resin; a polycarbonate (PC) resin; a polyethylene terephthalate (PET) resin; a resin containing one or more of acrylonitrile and the like as a main component; and a transparent polyimide resin. Examples of the reactive resin include non-ionizing radiation-curable resins, such as acrylic, epoxy-based, urethane-based, silicone-based, and ene-thiol-based resins.

The refractive index of the light guide plate is preferably from 1.4 to 2.5, more preferably from 1.5 to 2.4, still more preferably from 1.6 to 2.3. When the refractive index falls within such ranges, satisfactory light incidence from the outside, satisfactory light emission to the outside, and satisfactory total reflection inside the light guide plate can be achieved.

### C. Low-refractive Index Layer

The low-refractive index layer **20** typically has a void inside. The void ratio of the low-refractive index layer is preferably 35 vol% or more, more preferably 38 vol% or more, particularly preferably 40 vol% or more. When the void ratio falls within such ranges, a low-refractive index layer having a particularly low refractive index can be formed. The upper limit of the void ratio of the low-refractive index layer is, for example, 90 vol% or less, preferably 75 vol% or less. When the void ratio falls within such ranges, a low-refractive index layer having excellent strength can be formed. The void ratio is a value calculated from the value of the refractive index measured with an ellipsometer in accordance with Lorentz-Lorenz's formula.

The refractive index of the low-refractive index layer is, for example, 1.25 or less, preferably 1.23 or less, more preferably 1.22 or less, still more preferably 1.20 or less, particularly preferably 1.19 or less. Meanwhile, the refractive index of the low-refractive index layer is preferably 1.05 or more, more preferably 1.08 or more, still more preferably 1.10 or more. When the low-refractive index layer having such refractive index is arranged on the main surface of the light guide plate, a light guide loss is suppressed substantially without any influences on the optical properties of the light guide plate, and hence excellent light guiding performance can be achieved. Further, the low-refractive index layer can contribute to the thinning and lightweighting of the optical member (as a result, a pair of AR glasses and the like) because the low-refractive index layer can be made significantly thin as described later. In addition, when the refractive index of the low-refractive index layer falls within such ranges as described above, predetermined mechanical strength can be secured, and damage to the low-refractive index layer can be suppressed. Unless otherwise stated, the refractive index refers to a refractive index measured at a wavelength of 550 nm or a refractive index converted to a 550 nm value from a measured value at any other wavelength and a refractive index wavelength dispersion. The refractive index is a value measured by a method described in the section "(1) Refractive Index of Low-refractive Index Layer" in Examples to be described later.

The total light transmittance of the low-refractive index layer is preferably from 85% to 99%, more preferably from 87% to 98%, still more preferably from 89% to 97%. When the low-refractive index layer having such refractive index is arranged on the main surface of the light guide plate, excellent transparency can be secured while an effect exhibited by the above-mentioned refractive index is exhibited. As a result, the optical member may be suitably used for a pair of AR glasses and the like.

The haze of the low-refractive index layer is, for example, less than 5%, preferably less than 3%. Meanwhile, the haze is, for example, 0.05% or more, preferably 0.1% or more. When the low-refractive index layer having such haze is arranged on the main surface of the light guide plate, excellent transparency can be secured while the effect exhibited by the above-mentioned refractive index is exhibited. As a result, the optical member may be suitably used for a pair of AR glasses and the like. The haze may be measured by, for example, the following method.

A low-refractive index layer is formed on glass measuring 50 mm by 50 mm, and is set in a haze meter (HM-150, manufactured by Murakami Color Research Laboratory Co., Ltd.), followed by the measurement of its haze. The haze value is calculated from the following equation. 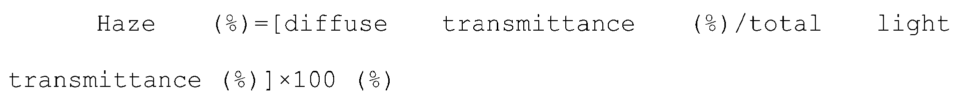 Haze (%)=[diffuse transmittance (%)/total light transmittance (%)]×100 (%)

The thickness of the low-refractive index layer is preferably 5 µm or less, more preferably 4 µm or less, still more preferably 3 µm or less, particularly preferably 2 µm or less, extremely preferably 1.5 µm or less. Meanwhile, the thickness of the low-refractive index layer is preferably 300 nm or more, more preferably 400 nm or more, still more preferably 500 nm or more. When the thickness of the low-refractive index layer falls within such ranges, light leakage can be satisfactorily suppressed while excellent transparency is secured.

The surface roughness Rz on the light guide plate side of the low-refractive index layer (in a production process for the optical member, a first base material side to be described later) is preferably 200 nm or less, more preferably 100 nm or less, still more preferably 50 nm or less. The surface roughness on a side of the first base material in contact with the low-refractive index layer is transferred almost as it is, and hence the above-mentioned surface roughness may be determined at the time of the coating of a material for forming a low-refractive index layer on the first base material. When the surface roughness Rz of the low-refractive index layer falls within such ranges, sufficient adhesion between the low-refractive index layer and the light guide plate can be secured in a method of producing an optical member to be described later. As a result, the first base material can be appropriately peeled without any damage to the low-refractive index layer. The surface roughness Rz refers to the maximum height based on JIS B 0601.

Any appropriate configuration may be adopted for the low-refractive index layer as long as the layer has the above-mentioned desired characteristics. The low-refractive index layer may be preferably formed by coating, printing, or the like. Materials described in, for example, WO 2004/113966 A1, JP 2013-254183 A, and JP 2012-189802 A may each be adopted as a material for forming the low-refractive index layer. A typical example thereof is a silicon compound. Examples of the silicon compound include: silica-based compounds; hydrolyzable silanes, and partial hydrolysates and dehydration condensates thereof; silanol group-containing silicon compounds; and active silica obtained by bringing a silicate into contact with an acid or an ion-exchange resin. The examples thereof also include: organic polymers; polymerizable monomers (e.g., a (meth)acrylic monomer and a styrene-based monomer); and curable resins (e.g., a (meth)acrylic resin, a fluorine-containing resin, and a urethane resin). Those materials may be used alone or in combination thereof. The low-refractive index layer may be formed by, for example, applying or printing a solution or dispersion liquid of such material.

The size of a void (pore) in the low-refractive index layer refers to a long-axis diameter among the long-axis diameter and short-axis diameter of the void (pore). The size of the void (pore) is, for example, from 2 nm to 500 nm. The size of the void (pore) is, for example, 2 nm or more, preferably 5 nm or more, more preferably 10 nm or more, still more preferably 20 nm or more. Meanwhile, the size of the void (pore) is, for example, 500 nm or less, preferably 200 nm or less, more preferably 100 nm or less. The range of the size of the void (pore) is, for example, from 2 nm to 500 nm, preferably from 5 nm to 500 nm, more preferably from 10 nm to 200 nm, still more preferably from 20 nm to 100 nm. The size of the void (pore) may be adjusted to a desired size in accordance with purposes, applications, and the like. The size of the void (pore) may be quantified by a BET test method.

The size of the void (pore) may be quantified by the BET test method. Specifically, 0.1 g of a sample (formed void layer) is loaded into a capillary of a high-precision gas adsorption measuring device ("BELSORP MINI" manufactured by MicrotracBEL Corp.), and is then dried under reduced pressure at room temperature for 24 hours so that a gas in a void structure is removed. Then, an adsorption isotherm is drawn by causing the above-mentioned sample to adsorb a nitrogen gas, and its pore size distribution is determined. Thus, the size of the void may be evaluated.

The above-mentioned low-refractive index layer having a void inside is, for example, a low-refractive index layer and/or a low-refractive index layer including an air layer in at least part thereof. The low-refractive index layer typically contains aerogel and/or particles (e.g., hollow fine particles and/or porous particles). The low-refractive index layer may be preferably a nanoporous layer (specifically a low-refractive index layer in which the diameters of 90% or more of micropores fall within the range of from 10⁻¹ nm to 10³ nm).

Any appropriate particles may be adopted as the above-mentioned particles. The particles are each typically formed of a silica-based compound. Examples of the shapes of the particles include a spherical shape, a plate shape, a needle shape, a string shape, and a botryoidal shape. String-shaped particles are, for example, particles in which a plurality of particles each having a spherical shape, a plate shape, or a needle shape are strung together like beads, short fiber-shaped particles (e.g., short fiber-shaped particles described in JP 2001-188104 A), and a combination thereof. The string-shaped particles may be linear or branched. Botryoidal-shaped particles are, for example, particles in which a plurality of spherical, plate-shaped, and needle-shaped particles aggregate to form a botryoidal shape. The shapes of the particles may be identified through, for example, observation with a transmission electron microscope.

An example of a specific configuration of the low-refractive index layer is described below. The low-refractive index layer of this embodiment includes one or a plurality of kinds of constituent units each forming a fine void structure, and the constituent units are chemically bonded to each other through a catalytic action. Examples of the shapes of the constituent units include a particle shape, a fiber shape, a rod shape, and a flat plate shape. The constituent units may have only one shape, or may have two or more shapes in combination. A case in which the low-refractive index layer is a void layer of a porous body in which microporous particles are chemically bonded to each other is mainly described below.

Such void layer may be formed by, for example, chemically bonding microporous particles to each other in a void layer forming step. In the embodiment of the present invention, the shape of each of the "particles" (e.g., the above-mentioned microporous particles) is not particularly limited, and may be, for example, a spherical shape or any other shape. In addition, in the embodiment of the present invention, the above-mentioned microporous particles may be, for example, sol-gel beaded particles, nanoparticles (hollow nanosilica nanoballoon particles), or nanofibers. The microporous particles each typically contain an inorganic substance. Specific examples of the inorganic substance include silicon (Si), magnesium (Mg), aluminum (Al), titanium (Ti), zinc (Zn), and zirconium (Zr). Those inorganic substances may be used alone or in combination thereof. In one embodiment, the above-mentioned microporous particles are, for example, microporous particles of a silicon compound, and the above-mentioned porous body is, for example, a silicone porous body. The microporous particles of the silicon compound described above each contain, for example, a pulverized product of a gel-like silica compound. In addition, as another form of the low-refractive index layer and/or the low-refractive index layer including an air layer in at least part thereof, for example, the following void layer is available: the layer is formed of a fibrous substance such as a nanofiber; and the molecules of the fibrous substance are entangled with each other to form a void, to thereby form the layer. A method of producing such void layer is not particularly limited, and is the same as, for example, the case of the void layer of the porous body in which the above-mentioned microporous particles are chemically bonded to each other. Still other forms thereof include: a void layer using hollow nanoparticles or nanoclay; and a void layer formed by using hollow nanoballoons or magnesium fluoride. The void layer may be a void layer formed of a single constituent substance, or may be a void layer formed of a plurality of constituent substances. The void layer may be formed in a single form out of the above-mentioned forms, or may be formed by including a plurality of forms out of the above-mentioned forms.

In this embodiment, the porous structure of the porous body may be, for example, an open-cell structural body in which hole structures are continuous with each other. The open-cell structural body means that hole structures are three-dimensionally continuous with each other in, for example, the above-mentioned silicone porous body, and the open-cell structural body can be said to be a state in which the internal voids of the hole structure are continuous with each other. When the porous body has the open-cell structure, its void ratio can be increased. However, when closed-cell particles (particles each having an individual hole structure) such as hollow silica are used, an open-cell structure cannot be formed. Meanwhile, when, for example, silica sol particles (pulverized products of a gel-like silicon compound that forms a sol) are used, the particles each have a three-dimensional dendritic structure, and hence the dendritic particles are sedimented and deposited in a coating film (coating film of the sol containing the pulverized products of the gel-like silicon compound). Accordingly, an open-cell structure can be easily formed. The low-refractive index layer more preferably has a monolith structure in which an open-cell structure includes a plurality of pore size distributions. The monolith structure means, for example, a hierarchical structure including: a structure in which a nanosized fine void is present; and an open-cell structure in which the nano-voids assemble. When the monolith structure is formed, both of a film strength and a high void ratio can be achieved by, for example, imparting the high void ratio to the layer through use of a coarse open-cell void while imparting the film strength thereto through use of a fine void. Such monolith structure may be preferably formed by controlling the pore size distribution of a void structure to be produced in the gel (gel-like silicon compound) at a stage before its pulverization into the silica sol particles. In addition, the monolith structure may be formed by, for example, controlling, at the time of the pulverization of the gel-like silicon compound, the particle size distribution of the silica sol particles after the pulverization to a desired size.

The low-refractive index layer contains, for example, the pulverized products of the gel-like compound as described above, and the pulverized products are chemically bonded to each other. The form of chemical bonding between the pulverized products in the low-refractive index layer is not particularly limited, and examples thereof include cross-linking bonding, covalent bonding, and hydrogen bonding.

The volume-average particle diameter of the above-mentioned pulverized products in the low-refractive index layer is, for example, 10 nm or more, preferably 20 nm or more, more preferably 30 nm or more. Meanwhile, the volume-average particle diameter is, for example, 500 nm or less, preferably 400 nm or less, more preferably 300 nm or less. The range of the volume-average particle diameter is, for example, from 10 nm to 500 nm, preferably from 20 nm to 400 nm, more preferably from 30 nm to 300 nm. The particle size distribution of the pulverized products may be measured with, for example, a particle size distribution evaluation apparatus based on, for example, a dynamic light scattering method or a laser diffraction method, and an electron microscope, such as a scanning electron microscope (SEM) or a transmission electron microscope (TEM). The volume-average particle diameter is an indicator of variation in particle size of the pulverized products. Specifically, an indicator of D10, D50, or D90 may be adopted, and in particular, an indicator of D50 may be adopted as the value of the particle diameter.

The kind of the gel-like compound is not particularly limited. An example of the gel-like compound is a gel-like silicon compound.

In addition, for example, silicon atoms in the low-refractive index layer (void layer) preferably form a siloxane bond. As a specific example, the ratio of unbonded silicon atoms (i.e., residual silanol groups) out of all the silicon atoms in the void layer is, for example, less than 50%, preferably 30% or less, more preferably 15% or less.

An example of a method of forming such low-refractive index layer is described below.

The method typically includes: a precursor forming step of forming a void structure, which is a precursor of the low-refractive index layer (void layer), on the light guide plate; and a cross-linking reaction step of causing a cross-linking reaction inside the precursor after the precursor forming step. The method further includes: a containing liquid preparing step of preparing a containing liquid including the microporous particles (hereinafter sometimes referred to as "microporous particle-containing liquid" or simply "containing liquid"); and a drying step of drying the containing liquid. The precursor forming step includes chemically bonding the microporous particles in a dried body to each other to form a precursor. The containing liquid is not particularly limited, and is, for example, a suspension containing the microporous particles. A case in which the microporous particles are pulverized products of a gel-like compound and the void layer is a porous body (preferably, a silicone porous body) containing the pulverized products of the gel-like compound is mainly described below. However, the low-refractive index layer may be formed in the same manner when the microporous particles are other than the pulverized products of the gel-like compound.

According to the above-mentioned method, for example, a low-refractive index layer (void layer) having a significantly low refractive index is formed. A reason therefor is presumed, for example, as described below. However, the presumption does not limit the method of forming a low-refractive index layer.

The above-mentioned pulverized products are obtained by pulverizing the gel-like silicon compound, and hence may have a state in which the three-dimensional structures of the gel-like silicon compound before the pulverization are dispersed in a three-dimensional basic structure. Further, in the above-mentioned method, a precursor of a porous structure based on the three-dimensional basic structure is formed by applying pulverized products of the gel-like silicon compound onto a resin film. That is, according to the above-mentioned method, a new porous structure (three-dimensional basic structure) is formed by applying a pulverized product, which is different from the three-dimensional structure of the gel-like silicon compound. Accordingly, in the void layer to be finally obtained, a low refractive index layer that functions to the same extent as, for example, an air layer can be achieved. Further, in the above-mentioned method, the pulverized products are chemically bonded to each other, and hence the three-dimensional basic structure is fixed. Accordingly, the void layer to be finally obtained can maintain sufficient strength and flexibility despite having a structure having a void.

Details about specific configurations of the low-refractive index layer and the method of forming the low-refractive index layer are described in, for example, WO 2019/151073 A1, the description of which is incorporated herein by reference.

### D. Stress Relaxation Layer

The stress relaxation layer **30** may typically include a pressure-sensitive adhesive. The pressure-sensitive adhesive for forming the stress relaxation layer typically has such a hardness as not to penetrate into the void of the low-refractive index layer in a normal state. Accordingly, the storage modulus of elasticity of the stress relaxation layer at 23°C may be, for example, from 0.01 MPa (1.0×10⁴ Pa) to 10 MPa. More specifically, the storage modulus of elasticity of the stress relaxation layer at 23°C is preferably 0.02 MPa or more, more preferably 0.04 MPa or more, still more preferably 0.06 MPa or more, particularly preferably 0.08 MPa or more, extremely preferably 0.10 MPa or more. When the lower limit of the storage modulus of elasticity falls within such ranges, an adverse effect of the pressure-sensitive adhesive for forming the stress relaxation layer on the low-refractive index layer is suppressed, and hence an effect (excellent light guiding performance) exhibited by the low-refractive index layer can be satisfactorily maintained. Meanwhile, the storage modulus of elasticity of the stress relaxation layer at 23°C is preferably 5 MPa or less, more preferably 3 MPa or less, still more preferably 1 MPa or less, particularly preferably 0.70 MPa or less, extremely preferably 0.50 MPa or less, most preferably 0.20 MPa or less. When the upper limit of the storage modulus of elasticity falls within such ranges, the stress relaxation layer has excellent durability, has a buffer function (cushion function) against an external force, and can have softness capable of suppressing the peeling and/or breakage of the low-refractive index layer. The storage modulus of elasticity is determined by reading a value at 23°C at the time of measurement in conformity with a method described in JIS K 7244-1 "Plastics-Determination of dynamic mechanical properties" under the condition of a frequency of 1 Hz in the range of from -50°C to 150°C at a rate of temperature increase of 5°C/min.

The glass transition temperature (Tg) of the stress relaxation layer is preferably 0°C or less, more preferably from -100°C to -5°C, still more preferably from -90°C to -10°C. When the Tg of the stress relaxation layer falls within such ranges, similarly to an effect obtained by setting the storage modulus of elasticity within such ranges as described above, a stress relaxation layer that can achieve both of an excellent buffer function and excellent light guiding performance can be achieved.

Any appropriate pressure-sensitive adhesive may be used as the pressure-sensitive adhesive for forming the stress relaxation layer as long as the layer has such characteristics as described above. A typical example of the pressure-sensitive adhesive is an acrylic pressure-sensitive adhesive (acrylic pressure-sensitive adhesive composition). The acrylic pressure-sensitive adhesive composition typically contains a (meth)acrylic polymer as a main component (base polymer). The (meth)acrylic polymer may be incorporated into the pressure-sensitive adhesive composition at a ratio of, for example, 50 wt% or more, preferably 70 wt% or more, more preferably 90 wt% or more in the solid content of the pressure-sensitive adhesive composition. The (meth)acrylic polymer contains, as a main component, an alkyl (meth)acrylate serving as a monomer unit. The term "(meth)acrylate" refers to an acrylate and/or a methacrylate. The alkyl group of the alkyl (meth)acrylate is, for example, a linear or branched alkyl group having 1 to 18 carbon atoms. The average number of the carbon atoms of the alkyl group is preferably from 3 to 9. As a monomer for forming the (meth)acrylic polymer, in addition to the alkyl (meth)acrylate, there are given comonomers, such as a carboxyl group-containing monomer, a hydroxyl group-containing monomer, an amide group-containing monomer, an aromatic ring-containing (meth)acrylate, and a heterocycle-containing (meth)acrylate. The comonomers are each preferably a hydroxyl group-containing monomer and/or a heterocycle-containing (meth)acrylate, more preferably N-acryloylmorpholine. The acrylic pressure-sensitive adhesive composition may preferably contain a silane coupling agent and/or a cross-linking agent. An example of the silane coupling agent is an epoxy group-containing silane coupling agent. Examples of the cross-linking agent include an isocyanate-based cross-linking agent and a peroxide-based cross-linking agent. Details about such stress relaxation layer or acrylic pressure-sensitive adhesive composition are described in, for example, JP 4140736 B2, the description of which is incorporated herein by reference.

The thickness of the stress relaxation layer may vary depending on the storage modulus of elasticity. That is, in consideration of the buffer function (cushion function) against an external force, a larger thickness is preferred. In consideration of the light guiding performance, a smaller thickness is preferred. When the storage modulus of elasticity of the stress relaxation layer is small (soft), the thickness can be relatively reduced. In comprehensive consideration of those matters, the thickness of the stress relaxation layer is, for example, from 1 µm to 50 µm, preferably from 2 µm to 40 µm, more preferably from 3 µm to 30 µm, still more preferably from 4 µm to 20 µm, particularly preferably from 5 µm to 15 µm, extremely preferably from 6 µm to 12 µm. In the case where the thickness falls within such ranges, a stress relaxation layer that can achieve both of an excellent buffer function and excellent light guiding performance can be achieved. In this case, the storage modulus of elasticity of the stress relaxation layer at 23°C may be, for example, from 0.08 MPa to 0.20 MPa, from 0.09 MPa to 0.18 MPa, from 0.10 MPa to 0.15 MPa, or from 0.12 MPa to 0.14 MPa.

### E. Protective Layer

The tensile modulus of elasticity of the protective layer **40** is 20 MPa or more as described above, and is preferably 30 MPa or more, more preferably 50 MPa or more, still more preferably 100 MPa or more, particularly preferably 300 MPa or more. Meanwhile, the tensile modulus of elasticity of the protective layer is preferably 10 GPa or less, more preferably 8 GPa or less, still more preferably 6 GPa or less. When the tensile modulus of elasticity of the protective layer falls within such ranges, in the case where the optical member is subjected to practical use, excellent surface protection performance is imparted, and the breakage of the low-refractive index layer can be suppressed.

The Tg of the protective layer is preferably 20°C or more, more preferably 40°C or more, still more preferably 60°C or more, particularly preferably 70°C or more. Meanwhile, the Tg of the protective layer may be, for example, 250°C or less. When the Tg of the protective layer falls within such ranges, in the case where the optical member is subjected to practical use, excellent surface protection performance is imparted, and the breakage of the low-refractive index layer can be suppressed similarly to the effect obtained by setting the tensile modulus of elasticity within such ranges described above.

The protective layer includes any appropriate resin film as long as the layer can satisfy such characteristics as described above. Examples of a material for forming the resin film include: a (meth)acrylic resin; cellulose-based resins, such as diacetyl cellulose and triacetyl cellulose; a cycloolefin-based resin such as a norbornene-based resin; an olefin-based resin such as polypropylene; a polyester-based resin such as a polyethylene terephthalate-based resin; a polyamide-based resin; a polycarbonate-based resin; and a copolymer resin thereof. Of those, a (meth)acrylic resin or a polyester-based resin is preferred. The term "(meth)acrylic resin" refers to an acrylic resin and/or a methacrylic resin.

The thickness of the protective layer may be, for example, from 3 µm to 200 µm. When the thickness of the protective layer falls within such range, the thickness of the optical member can be reduced. In addition, in the case where the optical member is subjected to practical use, excellent surface protection performance is imparted, and the breakage of the low-refractive index layer can be suppressed. Further, as described later, appropriate strength for producing an optical member serving as the final product can be imparted to an optical laminate (intermediate) to be obtained. The thickness of the protective layer may vary depending on a purpose, a constituent material, and the like. The thickness of the protective layer may be, for example, from 5 µm to 190 µm, from 10 µm to 150 µm, from 15 µm to 130 µm, or from 20 µm to 100 µm.

A hard coat layer and/or an antireflection layer may be arranged on the side of the protective layer opposite to the stress relaxation layer. When the hard coat layer is arranged, the breakage of the low-refractive index layer can be further suppressed. The hard coat layer has a pencil hardness of preferably H or more, more preferably 2H or more, still more preferably 3H or more. Meanwhile, the pencil hardness of the hard coat layer is preferably 6H or less, more preferably 5H or less. The pencil hardness may be measured on the basis of "Pencil Hardness Test" of JIS K 5400. The thickness of the hard coat layer may be, for example, from 0.5 µm to 30 µm, from 1 µm to 20 µm, or from 2 µm to 15 µm. Details about the hard coat layer are described in, for example, JP 2011-237789 A and JP 2016-224443 A, the descriptions of which are incorporated herein by reference.

Any appropriate configuration may be adopted as the configuration of the antireflection layer. Typical examples of the configuration of the antireflection layer include: (1) a single layer of a low-refractive index layer having an optical thickness of from 120 nm to 140 nm and a refractive index of from about 1.35 to about 1.55; (2) a laminate including an intermediate-refractive index layer, a high-refractive index layer, and a low-refractive index layer in this order from the light guide plate side; and (3) an alternating multilayer laminate of high-refractive index layers and low-refractive index layers. The thickness of such antireflection layer is, for example, from about 5 nm to about 300 nm. The antireflection layer may be a cured layer of a non-ionizing radiation-curable resin composition. The thickness of such antireflection layer may be, for example, from 1.0 µm to 20 µm, from 2.0 µm to 10 µm, or from 3.0 µm to 7.0 µm. Detailed descriptions of the constituent materials and formation methods of the antireflection layer in any of the embodiments are omitted because the materials and methods are well known in the art.

### F. Adhesion-assisting Layer

The adhesion-assisting layer typically contains a silane coupling agent as described above. Examples of the silane coupling agent include an acrylic silane coupling agent, an amino-based silane coupling agent, an epoxy-based silane coupling agent, and a mercapto-based silane coupling agent. The silane coupling agents may be used alone or in combination thereof. In one embodiment, the silane coupling agent includes an acrylic silane coupling agent, and may include, for example, an acrylic silane coupling agent in combination with an amino-based silane coupling agent, an epoxy-based silane coupling agent, a mercapto-based silane coupling agent, or a combination thereof (another silane coupling agent). The acrylic silane coupling agents and the other silane coupling agents may each be used alone or in combination thereof. When the adhesion-assisting layer containing the silane coupling agent is arranged, further excellent strength can be achieved without impairment of the light guiding performance of the optical member.

The acrylic silane coupling agent is typically a silane coupling agent having a (meth)acrylic group in its skeleton. Examples of the acrylic silane coupling agent include 3-methacryloxypropyltrimethoxysilane, 3-methacryloxypropyltriethoxysilane, 3-acryloxypropyltrimethoxysilane, 3-acryloxypropyltriethoxysilane, methacryloxymethyltrimethoxysilane, methacryloxymethyltriethoxysilane, acryloxymethyltrimethoxysilane, acryloxymethyltriethoxysilane, and 3-methacryloxypropylmethyldimethoxysilane. Further, many products are each commercially available as the acrylic silane coupling agent. Specific examples of the commercial products include "KBM-502" and "KBM-5103" manufactured by Shin-Etsu Chemical Co., Ltd. Of those, 3-acryloxypropyltrimethoxysilane or 3-methacryloxypropylmethyldimethoxysilane is preferred.

Examples of the amino-based silane coupling agent include γ-aminopropyltriethoxysilane, γ-aminopropyltrimethoxysilane, N-(β-aminoethyl)-γ-aminopropyltrimethoxysilane, N-(β-aminoethyl)-γ-aminopropyltriethoxysilane, N-(β-aminoethyl)-γ-aminopropylmethyldimethoxysilane, γ-phenylaminopropyltrimethoxysilane, and 3-triethoxysilyl-N-(1,3-dimethyl-butylidene)propylamine. Further, many products are each commercially available as the amino-based silane coupling agent. Specific examples of the commercial products include "KBM-903", "KBE-9103", "KBM-575", and "KBM-6123" manufactured by Shin-Etsu Chemical Co., Ltd., and "A-1102", "A-1122", and "A-1170" manufactured by Momentive Performance Materials Japan LLC. Of those, 3-triethoxysilyl-N-(1,3-dimethylbutylidene)propylamine is preferred.

Examples of the epoxy-based silane coupling agent include γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, β-(3,4-epoxycyclohexyl)ethyltriethoxysilane, and γ-glycidoxypropylmethyldimethoxysilane. Further, many products are each commercially available as the epoxy-based silane coupling agent. Specific examples of the commercial products include "KBM-402" and "KBM-403" manufactured by Shin-Etsu Chemical Co., Ltd. Of those, γ-glycidoxypropylmethyldimethoxysilane is preferred.

Examples of the mercapto-based silane coupling agent include γ-mercaptopropyltrimethoxysilane, γ-mercaptopropyltriethoxysilane, γ-mercaptopropylmethyldimethoxysilane, and γ-mercaptopropylmethyldiethoxysilane. Further, many products are each commercially available as the mercapto-based silane coupling agent. A specific example of the commercial products is "X-12-1056ES" manufactured by Shin-Etsu Chemical Co., Ltd.

In the case where the acrylic silane coupling agent and another silane coupling agent are used in combination, when the total of the silane coupling agents is set to 100, a content ratio between the acrylic silane coupling agent and the other silane coupling agent is preferably from 40/60 to 60/40, more preferably from 45/55 to 55/45, still more preferably from 47/53 to 53/47, particularly preferably about 50/50.

The thickness of the adhesion-assisting layer is preferably as thin as possible as long as the layer has a function of assisting adhesion between the light guide plate and the low-refractive index layer. This is because an adverse effect on the light guiding performance of the optical member is minimized. Specifically, the thickness of the adhesion-assisting layer is preferably 500 nm or less, more preferably 100 nm or less, still more preferably 50 nm or less, particularly preferably 10 nm or less, extremely preferably 5 nm or less, most preferably 4 nm or less. The thickness of the adhesion-assisting layer may be, for example, 0.5 nm or more, or may be, for example, 0.7 nm or more. The thickness of the adhesion-assisting layer may be, for example, from 0.8 nm to 3.5 nm, or may be, for example, from 0.9 nm to 3 nm. When the thickness of the adhesion-assisting layer is significantly small (e.g., 3 nm or less), the layer may not be clearly recognized as a layer as described above.

The adhesion-assisting layer may be formed by: applying a solution, which is obtained by dissolving the silane coupling agent (silane compound) in an appropriate solvent (e.g., water or isopropyl alcohol), to the surface of the light guide plate; and drying the solution after the lamination of the low-refractive index layer. The adhesion-assisting layer itself after drying (forming) does not have an adhesive function or a pressure-sensitive adhesive function as described above, but can assist and/or promote adhesion between the light guide plate and the low-refractive index layer when a coating film of the solution is dried.

### G. Method of producing Optical Member

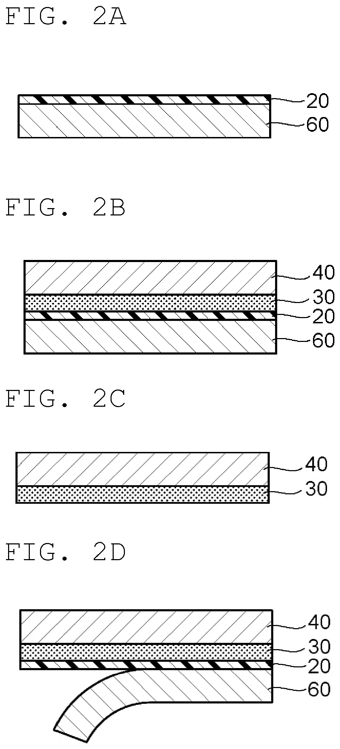

According to an embodiment of the present invention, a method of producing the above-mentioned optical member is provided. The production method includes the steps of: forming a low-refractive index layer on a first base material to produce a first laminate; arranging a stress relaxation layer and a second base material in this order on the low-refractive index layer of the first laminate to produce an optical laminate; peeling the first base material from the optical laminate; and laminating the optical laminate from which the first base material has been peeled and a light guide plate so that the low-refractive index layer and the light guide plate are adjacent to each other. The respective steps are specifically described below with reference to FIG. **2A** to FIG. **2E**. The lamination in each step may be performed by a roll-to-roll process, or may be performed in a batch mode, such as a roll-to-sheet or sheet-to-sheet process.

### G-1. First Laminate Production Step

First, as illustrated in FIG. **2A**, the low-refractive index layer **20** is formed on a first base material **60** to produce a first laminate. The low-refractive index layer may be formed by applying or printing a solution or dispersion liquid of the material for forming a low-refractive index layer described in the above-mentioned section C, and drying a coating film or a printing film.

A peeling force between the first base material **60** and the low-refractive index layer is preferably 0.5 N/25 mm or less, more preferably 0.4 N/25 mm or less, still more preferably 0.3 N/25 mm or less, particularly preferably 0.2 N/25 mm or less, extremely preferably 0.15 N/25 mm or less. Meanwhile, the peeling force may be, for example, 0.01 N/25 mm or more, or may be, for example, 0.02 N/25 mm or more. When the peeling force between the first base material and the low-refractive index layer falls within such ranges, an optical laminate (intermediate) to be obtained has an appropriate strength for producing an optical member serving as the final product, and the first base material can be satisfactorily peeled.

Any appropriate configuration may be adopted for the first base material as long as the low-refractive index layer can be formed, and such peeling force between the first base material and the low-refractive index layer as described above is provided. For example, the first base material may be a single resin film, or may be a laminated film including two or more resin layers. When the first base material is a single resin film, a specific configuration is as described in the above-mentioned section E with regard to the protective layer.

When the first base material is a laminated film including two or more resin layers, the first base material typically has a first resin layer and a second resin layer in this order from the low-refractive index layer side. The first resin layer is typically a solidified layer of a coating film of a resin solution. The second resin layer may typically have a configuration similar to that in the case where the first base material is a single resin film. In one embodiment, the first resin layer contains a cycloolefin-based resin, and the second resin layer contains a polyester-based resin. With such configuration, the strength of an optical laminate to be obtained and the peelability of the first base material can be further excellent.

### G-2. Optical Laminate Production Step

Next, as illustrated in FIG. **2B**, the stress relaxation layer **30** and the second base material **40** are sequentially laminated on the low-refractive index layer **20** of the first laminate to produce an optical laminate. The stress relaxation layer **30** is typically formed on any appropriate base material, and then transferred to the first laminate (substantially the low-refractive index layer). The second base material **40** is bonded to the first laminate via the stress relaxation layer **30**. Alternatively, as illustrated in FIG. **2C**, the stress relaxation layer **30** may be formed on the second base material **40** to produce a second laminate, and the first laminate and the second laminate may be laminated via the stress relaxation layer **30** to produce such an optical laminate as illustrated in FIG. **2B**.

In any of the above-mentioned embodiments, the lamination of the stress relaxation layer or the second laminate to the first laminate may preferably be continuously performed from the production of the first laminate. In other words, the production of the optical laminate may be performed without winding of the first laminate into a roll shape once. With such configuration, a scratch or contamination on the low-refractive index layer when the first laminate is wound into a roll shape, and the deformation and/or breakage of the low-refractive index layer due to winding tightening can be prevented. The resultant optical laminate may be wound into a roll shape as required. The roll-shaped optical laminate may be subjected to subsequent steps after storage, or may be subjected to subsequent steps without storage.

### G-3. First Base Material Peeling Step

Next, as illustrated in FIG. **2D**, the first base material **60** is peeled from the optical laminate. The peeling of the first base material may be performed by any appropriate means. A peeling failure can be significantly suppressed because the first base material and the low-refractive index layer are configured to have an appropriate peeling force as described above.

### G-4. Optical Member Production Step

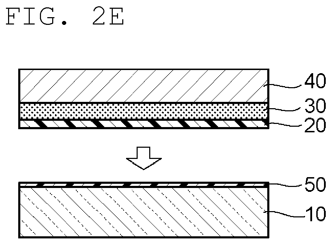

Finally, the optical laminate from which the first base material **60** has been peeled and the light guide plate **10** are laminated to produce an optical member. The optical laminate and the light guide plate may be directly laminated (not shown), or may be laminated via the adhesion-assisting layer **50** as illustrated in FIG. **2E**. In any case, the lamination may be performed under pressure. The pressure at the time of the lamination may be, for example, from 0.008 MPa to 5 MPa. When the adhesion-assisting layer is interposed, as described above, the adhesion-assisting layer can be formed, and the light guide plate and the low-refractive index layer can be closely laminated, by applying a solution, which is obtained by dissolving a silane coupling agent in an appropriate solvent (e.g., isopropyl alcohol, water, or a mixed solvent thereof), to the surface of the light guide plate, and drying the solution after the lamination of the low-refractive index layer. A drying temperature may be, for example, from 35°C to 150°C, and a drying time may be, for example, from 0.5 minute to 24 hours. In the resultant optical member, the second base material **40** can function as a protective layer.

### H. Optical Device

The optical member described in each of the above-mentioned sections A to G may be applied to an optical device. Accordingly, an optical device including the above-mentioned optical member is also encompassed in the embodiment of the present invention. Typical examples of the optical device include devices configured to overlap and display virtual visual information, such as a device for a pair of AR glasses, a device for a pair of MR glasses, and a device for a pair of VR glasses. Other typical examples of the optical device include a device for an illumination apparatus and a backlight unit of an image display apparatus.

### Examples

The present invention is specifically described below by way of Examples. However, the present invention is not limited to these Examples. Measurement methods for the respective characteristics are as described below. In addition, "%" and "part(s)" in Examples are by weight unless otherwise specified.

### (1) Refractive Index of Low-refractive Index Layer

A low-refractive index layer with a protective layer was bonded to a glass light guide plate, and then laser light (λ=407 nm) was caused to enter from a glass light guide plate side by using a prism coupler (manufactured by Metricon Corporation). The refractive index of the low-refractive index layer at 407 nm was calculated from the measured value of a total reflection angle, and was converted to a refractive index at 550 nm from the wavelength dispersion of a single low-refractive index film calculated separately with an ellipsometer (manufactured by J.A. Woollam Co., Inc.).

### (2) Strength of Optical Member

An optical member obtained in each of Examples and Comparative Examples was sampled into strips each measuring 50 mm by 140 mm, and a light guide plate side was further fixed to a stainless steel plate with a double-sided tape. An acrylic pressure-sensitive adhesive layer (thickness: 20 µm) was bonded to a PET film ("T100" manufactured by Mitsubishi Plastics, Inc.), and a pressure-sensitive adhesive tape piece cut into 25 mm by 100 mm was bonded onto the protective layer of the above-mentioned optical member to provide a test sample. Next, the test sample was chucked to an Autograph tensile testing machine ("AG-X plus" manufactured by Shimadzu Corporation) so that a distance between chucks was 100 mm. Then, the sample was subjected to a tensile test at a tensile rate of 0.3 m/min. An average test force (N/25 mm) obtained by performing a 50 mm peel test was defined as the strength of the optical member. In addition, the sample was loaded in an environment at 60°C/90%RH for 24 hours, and then its strength was measured.

### (3) Light Guiding Performance

A prism was bonded onto the light guide plate of the optical member obtained in each of Examples and Comparative Examples, and an image was caused to enter, and guided in, the light guide plate via the prism. Another prism was also bonded to an end on an opposite side to a light incident portion on the light guide plate for the purpose of emitting light, and an emitted image was visually observed and evaluated in accordance with the following criteria.
○ (Satisfactory): No change from the image at the time of the light entry was recognized.
× (Poor): Image distortion and/or a reduction in luminance was recognized as compared to the image at the time of the light entry.

### [Production Example 1] Preparation of Coating Liquid for forming Low-refractive Index Layer

### (1) Gelation of Silicon Compound

0.95 g of methyltrimethoxysilane (MTMS) that was a precursor of a silicon compound was dissolved in 2.2 g of dimethyl sulfoxide (DMSO). Thus, a mixed liquid A was prepared. 0.5 g of a 0.01 mol/L aqueous solution of oxalic acid was added to the mixed liquid A, and the mixture was stirred at room temperature for 30 minutes so that MTMS was hydrolyzed. Thus, a mixed liquid B containing tris(hydroxy)methylsilane was produced.

0.38 g of 28 wt% ammonia water and 0.2 g of pure water were added to 5.5 g of DMSO, and then the above-mentioned mixed liquid B was further added to the mixture, followed by stirring at room temperature for 15 minutes to perform the gelation of tris(hydroxy)methylsilane. Thus, a mixed liquid C containing a gel-like silicon compound was obtained.

### (2) Aging Treatment

Aging treatment was performed by incubating the mixed liquid C containing the gel-like silicon compound, which had been prepared as described above, as it was at 40°C for 20 hours.

### (3) Pulverization Treatment

Next, the gel-like silicon compound subjected to the aging treatment as described above was crushed into granular shapes each having a size of from several millimeters to several centimeters with a spatula. Next, 40 g of isopropyl alcohol (IPA) was added to the mixed liquid C, and the mixture was lightly stirred. After that, the mixture was left at rest at room temperature for 6 hours so that the solvent and a catalyst in the gel were decanted. The same decantation treatment was performed three times to replace the solvent with IPA. Thus, a mixed liquid D was obtained. Next, the gel-like silicon compound in the mixed liquid D was subjected to pulverization treatment (high-pressure media-less pulverization). The pulverization treatment (high-pressure media-less pulverization) was performed as follows: a homogenizer (manufactured by SMT Co., Ltd., product name: "UH-50") was used, and 1.85 g of the gel-like silicon compound in the mixed liquid D and 1.15 g of IPA were weighed in a 5-cubic centimeter screw bottle, followed by the performance of the pulverization of the mixture under the conditions of 50 W and 20 kHz for 2 minutes.

The gel-like silicon compound in the above-mentioned mixed liquid D was pulverized by the pulverization treatment, and hence the mixed liquid D was turned into a sol liquid E of the pulverized products. Further, a methyl ethyl ketone (MEK) solution of a photobase generator (Wako Pure Chemical Industries, Ltd.: product name: WPBG-266) having a concentration of 1.5 wt% and a MEK solution of bis(trimethoxysilyl)hexane having a concentration of 5% were added at ratios of 0.062 g and 0.036 g, respectively, to 0.75 g of the sol liquid E. Thus, a coating liquid for forming a low-refractive index layer was obtained.

### [Production Example 2] Preparation of Pressure-sensitive Adhesive for forming Stress Relaxation Layer

90.7 parts of butyl acrylate, 6 parts of N-acryloylmorpholine, 3 parts of acrylic acid, 0.3 part of 2-hydroxybutyl acrylate, and 0.1 part of 2,2'-azobisisobutyronitrile serving as a polymerization initiator were loaded into a four-necked flask including a stirring blade, a temperature gauge, a nitrogen gas-introducing tube, and a condenser together with 100 g of ethyl acetate, and a nitrogen gas was introduced to purge the flask with nitrogen while the mixture was gently stirred. After that, a liquid temperature in the flask was kept at around 55°C, and a polymerization reaction was performed for 8 hours to prepare an acrylic polymer solution. 0.2 Part of an isocyanate cross-linking agent (CORONATE L manufactured by Nippon Polyurethane Industry Co., Ltd., tolylene diisocyanate adduct of trimethylolpropane), 0.3 part of benzoyl peroxide (NYPER BMT manufactured by Nippon Oil & Fats Co., Ltd.), and 0.2 part of γ-glycidoxypropylmethoxysilane (manufactured by Shin-Etsu Chemical Co., Ltd.: KBM-403) were blended into 100 parts of the solid content of the resultant acrylic polymer solution to prepare an acrylic pressure-sensitive adhesive solution. Next, the above-mentioned acrylic pressure-sensitive adhesive solution was applied to one surface of a silicone-treated polyethylene terephthalate (PET) film (manufactured by Mitsubishi Chemical Polyester Film Co., Ltd., thickness: 38 µm) so that the thickness of a pressure-sensitive adhesive layer after drying became 10 µm, followed by drying at 150°C for 3 minutes. Thus, the pressure-sensitive adhesive layer was formed. The resultant pressure-sensitive adhesive layer had a storage modulus of elasticity of 1.3×10⁵ Pa (0.13 MPa) and a Tg of -60°C. The pressure-sensitive adhesive layer was used as a stress relaxation layer.

### [Example 1]

A commercially available cycloolefin resin (COP) ("ZEONEX F52R" manufactured by Zeon Corporation) was dissolved in a mixed solvent of ethylcyclohexane/limonene (mixing ratio: 80/20) to prepare a resin solution (solid content concentration: 5%). The resin solution was applied to the surface of a commercially available polyethylene terephthalate (PET) film (thickness: 50 µm) and dried to form a COP layer having a thickness of 2 µm. Thus, a laminated film having the configuration "first resin layer (COP layer)/second resin layer (PET layer)" was obtained. The resultant laminated film was used as a first base material. The coating liquid for forming a low-refractive index layer obtained in Production Example 1 was applied to the surface of the COP layer of the first base material and dried to form a low-refractive index layer having a thickness of 2 µm. The void ratio of the low-refractive index layer was 56 vol%, and the refractive index thereof was 1.18. Next, the stress relaxation layer (thickness: 10 µm) formed in Production Example 2 was transferred to the surface of the low-refractive index layer. Further, an acrylic film (thickness: 30 µm, tensile modulus of elasticity: 3,650 MPa, Tg: 100°C) serving as a protective layer (second base material) was laminated on the surface of the stress relaxation layer to provide an optical laminate. The lamination was performed by a roll-to-roll process.

The first base material was peeled from the resultant optical laminate. Meanwhile, the low-refractive index layer side of the optical laminate from which the first base material had been peeled was bonded to the corona-treated surface of a glass plate for a light guide plate, whose surface had been subjected to corona treatment, via an aqueous solution (0.5%) of an amino-based silane coupling agent ("KBM-903" manufactured by Shin-Etsu Chemical Co., Ltd.) serving as an adhesion-assisting layer. The bonding was performed under a pressure of 0.01 MPa. After the bonding, the resultant was dried at 40°C for 10 hours to provide an optical member. The thickness of the adhesion-assisting layer in the resultant optical member was 3 nm. The resultant optical member was subjected to the evaluations of the above-mentioned sections "Strength" and "Light Guiding Performance." The results are shown in Table 1.

### [Example 2]

An optical member was produced in the same manner as in Example 1 except that the silane coupling agent was changed to an epoxy-based silane coupling agent ("KBM-403" manufactured by Shin-Etsu Chemical Co., Ltd.). The resultant optical member was subjected to the same evaluations as those in Example 1. The results are shown in Table 1.

### [Example 3]

An optical member was produced in the same manner as in Example 1 except that a PET film (thickness: 75 µm, tensile modulus of elasticity: 4,000 MPa, Tg: 78°C) was used instead of the acrylic film as the protective layer (second base material). The resultant optical member was subjected to the same evaluations as those in Example 1. The results are shown in Table 1.

### [Example 4]

An optical member was produced in the same manner as in Example 1 except that the bonding was performed via water instead of the adhesion-assisting layer. The resultant optical member was subjected to the same evaluations as those in Example 1. The results are shown in Table 1.

### [Comparative Example 1]

A low-refractive index layer was formed on the surface of the same protective layer (second base material) as that in Example 1 in the same manner as in Example 1. An optical member was produced in the same manner as in Example 1 except that a laminate having the configuration "protective layer/low-refractive index layer" was used. That is, the optical member was produced in the same manner as in Example 1 except that no stress relaxation layer was arranged between the protective layer and the low-refractive index layer. The resultant optical member was subjected to the same evaluations as those in Example 1. The results are shown in Table 1.

### [Comparative Example 2]

An optical member was produced in the same manner as in Comparative Example 1 except that the PET film of Example 3 was used as the protective layer (second base material). The resultant optical member was subjected to the same evaluations as those in Example 1. The results are shown in Table 1.

### [Comparative Example 3]

A low-refractive index layer was formed on the surface of the same protective layer (second base material) as that in Example 1 in the same manner as in Example 1. Further, a pressure-sensitive adhesive layer similar to the stress relaxation layer of Example 1 was transferred to the surface of the low-refractive index layer. The resultant laminate was bonded to the same glass plate for a light guide plate as that in Example 1 via the pressure-sensitive adhesive layer to provide an optical member. The resultant optical member was subjected to the same evaluations as those in Example 1. The results are shown in Table 1.

**Table 1**

| | Example 1 | Example 2 | Example 3 | Example 4 | Comparative Example 1 | Comparative Example 2 | Comparative Example 3 |
|---|---|---|---|---|---|---|---|
| Configuration | Protective layer | Protective layer | Protective layer | Protective layer | Protective layer | Protective layer | Protective layer |
| | Stress relaxation layer | Stress relaxation layer | Stress relaxation layer | Stress relaxation layer | - | - | - |
| | Low-refractive index layer | Low-refractive index layer | Low-refractive index layer | Low-refractive index layer | Low-refractive index layer | Low-refractive index layer | Low-refractive index layer |
| | Adhesion-assisting layer | Adhesion-assisting layer | Adhesion-assisting layer | - | Adhesion-assisting layer | Adhesion-assisting layer | Pressure-sensitive adhesive layer |
| | Light guide plate | Light guide plate | Light guide plate | Light guide plate | Light guide plate | Light guide plate | Light guide plate |
| Strength 1 | 1.1 N | 1.1 N | 2 N | 1.1 N | 0.1 N | 0.1 N | 1.5 N |
| Strength 2 | 1.1 N | 1.1 N | 2 N | Naturally peeled off | 0.1 N | 0.1 N | 1.5 N |
| Light guiding performance | ○ | ○ | ○ | ○ | ○ | ○ | × |

| | | | | | | | |
|---|---|---|---|---|---|---|---|
| *"Strength 1" indicates the strength at the time of bonding, and "Strength 2" indicates the strength after heating and humidification treatment. | | | | | | | |

As is apparent from Table 1, it is found that according to each of Examples of the present invention, there is obtained an optical member including a light guide plate and a low-refractive index layer, the optical member having sufficient strength as a laminate and having excellent light guiding performance. More specifically, it is found that, when the stress relaxation layer is arranged on the side of the low-refractive index layer opposite to the light guide plate, a peeling force between the light guide plate and the low-refractive index layer is increased (as a result, the strength as a laminate is increased), and when neither an adhesive nor a pressure-sensitive adhesive is used for laminating the light guide plate and the low-refractive index layer, excellent light guiding performance can be achieved.

### Industrial Applicability

The optical member according to the embodiment of the present invention may be suitably used for optical devices, such as a device for a pair of AR glasses, a device for a pair of MR glasses, a device for a pair of VR glasses, a device for an illumination apparatus, and a backlight unit of an image display apparatus.

### Reference Signs List

**10** light guide plate
**20** low-refractive index layer
**30** stress relaxation layer
**40** protective layer (second base material)
**50** adhesion-assisting layer
**60** first base material
**100** optical member

## Claims

1. An optical member, comprising:
a light guide plate;
a low-refractive index layer arranged on one main surface of the light guide plate;
a stress relaxation layer arranged on a side of the low-refractive index layer opposite to the light guide plate, the stress relaxation layer having a storage modulus of elasticity of from 0.01 MPa to 10 MPa; and
a protective layer arranged on a side of the stress relaxation layer opposite to the low-refractive index layer, the protective layer having a tensile modulus of elasticity of 20 MPa or more.

2. The optical member according to claim 1, wherein the low-refractive index layer has a refractive index of 1.25 or less.

3. The optical member according to claim 2, wherein the low-refractive index layer has a thickness of 5 µm or less.

4. The optical member according to claim 3, wherein the low-refractive index layer has a haze of less than 5%.

5. The optical member according to claim 1, wherein the low-refractive index layer is directly laminated on the light guide plate.

6. The optical member according to claim 1, wherein the stress relaxation layer has a storage modulus of elasticity of from 0.08 MPa to 0.20 MPa and a thickness of from 5 µm to 20 µm.

7. An optical device, comprising the optical member of any one of claims 1 to 6.

8. The optical device according to claim 7, wherein the optical device is selected from a device for a pair of AR glasses, a device for a pair of MR glasses, a device for a pair of VR glasses, a device for an illumination apparatus, and a backlight unit of an image display apparatus.

9. A method of producing the optical member of any one of claims 1 to 6, the method comprising the steps of:
forming a low-refractive index layer on a first base material to produce a first laminate;
arranging a stress relaxation layer and a second base material in this order on the low-refractive index layer of the first laminate to produce an optical laminate;
peeling the first base material from the optical laminate; and
laminating the optical laminate from which the first base material has been peeled and a light guide plate so that the low-refractive index layer and the light guide plate are adjacent to each other.

10. The method of producing an optical member according to claim 9, the method comprising directly laminating the optical laminate from which the first base material has been peeled and the light guide plate.
